# EUROPÄISCHE PATENTANMELDUNG

(11) **EP 1 628 458 A1**
(43) Veröffentlichungstag der Anmeldung: **22.02.2006**
(21) Anmeldenummer: 04019739.4
(22) Anmeldetag: 19.08.2004
(51) Int. Cl.: H04L 29/12, H04L 12/28

(54) **Verfahren zur Vermittlung von IP-Paketen zwischen Kundennetzen und IP-Provider-Netzen über ein Zugangsnetz**

(71) Anmelder: SIEMENS AKTIENGESELLSCHAFT, 80333 München (DE)
(72) Erfinder: Stademann, Rainer, Dr., 82335 Berg (DE); Theimer, Thomas, Dr., 82065 Baierbrunn (DE)

(57) **Zusammenfassung**

Die Erfindung soll simultane IP Sessions eines Endkunden über ein Zugangsnetz zu mehreren verschiedenen IP Netzen unabhängiger IP Dienstanbieter ermöglichen, ohne hierzu PPPoE zu benötigen.

Erfindungsgemäß wird diese Aufgabe durch eine Vermittlung der Datenpakete anhand der einer IP Session zugeordneten Daten gelöst.

## Beschreibung

Zukünftige Zugangsnetze für den breitbandigen Teilnehmeranschluss müssen höhere Bandbreiten bei niedrigeren Kosten zur Verfügung stellen, als dies mit den heute üblichen ATMbasierten Anschlussnetzen möglich ist. Aus diesem Grund sollen zukünftige Netze verstärkt auf der IP- und Ethernet-Technologie basieren, die sich derzeit als attraktive Lösung für Metro-Netze im Markt etabliert.

Während die Netzarchitektur für ATM-basierte Zugangsnetze im DSL Forum bereits definiert wurde, sind die Arbeiten zu IP- und Ethernet-basierten Zugangsnetzen noch im Anfangsstadium. Benötigt wird eine neue Netzarchitektur für die IP- und Ethernet-basierte Aggregation von breitbandigen Teilnehmeranschlüssen, welche die folgenden Anforderungen im optimaler Weise erfüllt:
- Dynamischer Netz-Zugang mit Authentifizierung und Zugangskontrolle
- Minimaler Administrationsaufwand für das Einrichten neuer Teilnehmer
- Gute Skalierbarkeit
- Verkehrstrennung zwischen einzelnen Teilnehmeranschlüssen
- Dynamische Auswahl verschiedener Dienste bzw. Dienstklassen
- Dynamische Auswahl verschiedener Dienstanbieter
- Aggregation vieler Teilnehmer in wenige, dienstspezifische logische Tunnel
- Unterstützung von - Quality of Service
- Hohe Resistenz gegen diverse Angriffe auf die Netzfunktion und -integrität

Gegenstand dieser Erfindung ist eine neuartige Aggregationslösung für den Einsatz insbesondere in Ethernet-orientierten Breitband-Zugangsnetzen. Die Erfindung soll simultane IP Sessions eines Endkunden über ein Ethernet-Zugangsnetz zu mehreren verschiedenen IP Netzen unabhängiger IP Dienstanbieter ermöglichen, ohne hierzu PPPoE zu benötigen. Unabhängige IP Netzbetreiber müssen ihre IP Adressräume nicht untereinander koordinieren, die Adressräume verschiedener IP Netzbetreiber können sich auch überlappen oder identisch sein. Mit der Erfindung soll es ermöglicht werden, dass kostengünstige Netze mit IP über Ethernet und einem DHCP basiertem Session Control aufgebaut werden können, während gleichzeitig mehrere unabhängige IP Netzbetreiber durch ein Zugangsnetz unterstützt werden können.

### Beispiel für die Aufgabenstellung gemäß der Erfindung

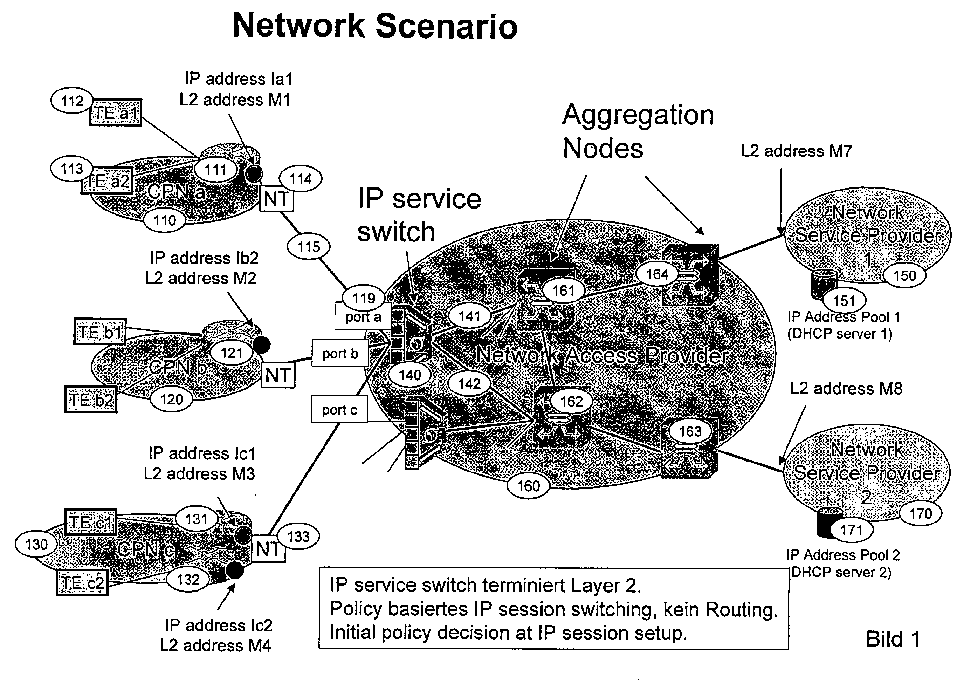

Ein Beispiel für ein Netzszenario, in dem sich diese Erfindung mit hohem Vorteil einsetzen lässt, ist in Bild 1 gezeigt. Dieses Szenario enthält drei Kundennetze 110, 120, 130. Beispielhaft sei zunächst das Kundennetz 110 betrachtet. Das Kundennetz 110 enthält zwei Endgeräte (zum Beispiel PCs) 112 und 113. Diese sind an einem Kunden-IP-Router 111 angeschlossen. Der Router 111 ist mit einem Netzabschluß (NT) 114 verbunden. Der Netzabschluss 114 ist über eine Zugangsleitung 115 mit dem "Port a", 119, des Zugangsknotens 140 verbunden. Der Zugangsknoten ist über zwei Uplinks 141 und 142 mit zwei Aggregationsknoten 161 und 162 verbunden. Über weitere optionale Aggregationsknoten 163 und 164 sind schließlich zwei IP Netze 150 und 170 zweier IP Netzbetreiber erreichbar. Zugangsknoten und Aggregationsknoten gehören zum Zugangsnetz 160 eines Zugangsnetzbetreibers.

Im Beispiel besteht nun die Aufgabe, für die Dauer einer IP Session IP Pakete zwischen Kundenrouter 111 und dem IP Netzbetreiber 150 über das Zugangsnetz zu transportieren, wozu der Netzbetreiber dem Kundenrouter zunächst eine IP Adresse (im Beispiel Ia1) zuweisen muss. Hierzu muss der Netzbetreiber 150 bekannte Protokolle, wie zum Beispiel DHCP, und weitere Hilfsmittel, wie zum Beispiel einen DHCP Server 151, einsetzen.

Entsprechend muss im Beispiel der Netzbetreiber 170 dem Kundenrouter 121 im Kundennetz 120 ebenfalls für die Dauer einer IP Session eine IP Adresse Ib2 zuweisen können und IP Pakete müssen über das Zugangsnetz 160 zwischen dem Kundenrouter 121 und dem Netzbetreiber 170 transportiert werden. Die IP Adressen Ia1 und Ib2 müssen dabei völlig unabhängig voneinander vergeben werden können.

Auch muss es möglich sein, dass einem Kundennetz mehrere IP Adressen von verschiedenen IP-Netzbetreibern gleichzeitig zugewiesen werden können. Ein Beispiel ist für das Kundennetz 130 gezeigt. Dieses enthält zwei Kundenrouter 131 und 132, die beide zum Beispiel über ein Ethernetnetz an den gleichen Netzabschluss 133 angeschlossen sind. Hier muss der IP Netzbetreiber 150 dem Router 131 eine IP Adresse Ic1 zuweisen können, während gleichzeitig der IP Netzbetreiber 170 dem zweiten Router 132 im selben Kundennetz eine IP Adresse Ic2 zuweisen können muss. IP Pakete müssen simultan über das Zugangsnetz 160 einerseits zwischen Router 131 und IP Netzbetreiber 150 und andererseits zwischen Router 132 und IP Netzbetreiber 170 transportiert werden können.

### Lösung der Aufgabenstellung gemäß der Erfindung

Die erfindungsgemäße Lösung besteht in einem Verfahren zur Vermittlung der Datenpakete anhand der einer IP Session zugeordneten Daten. Konkret bedeutet dies:
- Für Pakete in Richtung vom Kundennetz zu einem IP Netzbetreiber: empfangene Pakete werden anhand ihrer Ursprungs-Schicht-2-Adresse sowie Ursprungs-IP-Adresse einer IP Session zugeordnet (im Beispiel: M1 und Ia1). Alle Pakete einer IP Session werden an die der Session zugeordneten Schicht-2-Adresse des IP Netzbetreibers weitergeleitet (im Beispiel: M7).
- Für Pakete in Richtung von einem IP Netzbetreiber zum Kundennetz: empfangene Pakete werden anhand ihrer Ursprungs-Schicht-2-Adresse sowie Ziel-IP-Adresse einer IP Session zugeordnet (im Beispiel: M7, Ia1). Alle Pakete einer IP Session werden an die der Session zugeordneten Schicht-2-Adresse des Kundennetzes weitergeleitet (im Beispiel: M1).

### Zusatz-Aufgabenstellung gemäß der Erfindung

Neben der genannten Aufgabe der Erfindung ergibt sich in vielen Netzen eine weitere, damit zusammenhängende Aufgabenstellung, die im folgenden auch als Zusatz-Aufgabenstellung bezeichnet wird.
Für Geschäftskunden bieten Netzbetreiber oft durchgängige Netzdienste auf Schicht 2 an. Beispiele sind ATM Dienste (e.g. Permanent Virtual Circuit (PVC) Dienste), TDM Leased Line Services (e.g. E1/T1 Dienste) und neuerdings Metro Ethernet Dienste, wie z.B. vom Metro Ethernet Forum (MEF) spezifiziert. Bei diesen Diensten werden Schicht 2 Frames bzw. Zellen der jeweiligen Protokolle zwischen den Übergabepunkten des Geschäftskunden im Regelfall unverändert durch das Netz des Betreibers transportiert.
Für Privatkunden sind diese Schicht 2 basierten Dienste oft nicht notwendig, da es sich bei Privatkunden meist um Internet Zugangsdienste bzw. Zugangsdienste zu Applikation basierend auf dem IP Protokoll wie z.B. VoIP oder Video-Applikationen handelt. Diese Applikationen erfordern den Transport von IP-Paketen des Privatkunden zu einem oder mehren IP-Netzbetreibern, gegebenenfalls auch den simultanen Zugang zu mehreren IP-Netzbetreibern. Für diese Dienste ist der Transport von IP-Paketen zwischen dem Kundennetz und dem jeweiligen IP Netzbetreiber ausreichend. Zwar ist hierfür ein Schicht 2 basierter Dienst hinreichend, jedoch nicht notwendig. Da insbesondere mit Ethernet als Schicht 2 sowohl Skalierungsprobleme (e.g. z.B. nur 4096 VLAN tags) als auch diverse Sicherheitsrisiken verbunden sind (z.B. MAC Address Spoofing, MAC Address Flooding), ist es insbesondere für Privatkunden vorteilhaft, die Schicht 2 im Zugangsknoten zu terminieren und die IP Pakete selbst zum IP Netzbetreiber zu transportieren. Somit sind Lösungen besonders vorteilhaft, die *nicht* die vollständigen Ethernet Frames aus dem Kundennetz zum IP Netzbetreiber transportieren, sondern nur deren Schicht 3 Inhalt, nämlich das IP Paket.

### Bisher bekannte Lösungen für die genannte Zusatz-Aufgabenstellung

a) Die Architektur für ATM-basierte Breitband-Zugangsnetze mit QoS Unterstützung ist beispielsweise in den DSL-Forum Spezifikationen TR-058 und TR-059 beschrieben. Diese Netze basieren auf fest eingerichteten ATM Virtuellen Verbindungen (PVC) zwischen dem Teilnehmer-Anschluss und einem zentralen IP Netz-Zugangsknoten (Breitband Zugang Server, BAS). Der BAS (Broadband Access Server) übernimmt die Zugangskontrolle und Authentifizierung der Teilnehmer sowie Diensteauswahl. Diese Architektur hat verschiedene Nachteile:
   - Die Verbindungen (PVC) zwischen Teilnehmer und BAS müssen sowohl im ATM Netz wie auch im BAS konfiguriert werden.
   - Pro QoS Klasse wird jeweils ein eigener ATM PVC benötigt
   - Der Verkehr zwischen Teilnehmern muss immer über den BAS laufen
   - Heutige BAS Produkte erlauben keine kostengünstigen Dienste mit hohen Datenraten (beispielsweise mehrere Videokanäle pro Teilnehmer)
b) Ein Verfahren, welches für Ethernet Zugangsnetze das Sicherheitsproblem teilweise entschärft, ist im IETF Draft draft-melsen-mac-forced-fwd-02.txt mit Titel "MAC Forced Forwarding: An ARP proxy method for ensuring traffic separation between hosts sharing an Ethernet Access Network" von T.Melsen and S.Blake offen gelegt worden. Bei diesem Verfahren überprüft der Zugangsknoten die teilnehmerseitig verwendete MAC Zieladresse in den Ethernet-Frames auf Zulässigkeit. Ein ARP Proxy im Zugangsknoten gibt zusätzlich bei teilnehmerseitigen ARP Requests nur zulässige MAC Adressen zurück. Dieses Verfahren löst nicht das Problem des simultanen Zugangs zu verschiedenen unabhängigen IP Netzen.
c) Ein anderes Verfahren ist unter dem Namen "(Virtual) MAC Address Translation" bekannt. (siehe z.B. ITU Contribution COM 13 - D 447 - E der ZTE Corporation von Feb. 2004). Bei diesem Ansatz werden die MAC Adressen der teilnehmerseitigen Schicht 2 Endpunkte vom Zugangsknoten eineindeutig in "virtuelle" MAC Adressen, die der Zugangsnetz-Betreiber bestimmt, umgesetzt. Die MAC Adressen der netzseitigen Schicht 2 Endpunkte bleiben beim Durchgang der Ethernet Frames durch den Zugangsknoten unverändert. Nachteilig ist bei diesem Lösungsansatz insbesondere, dass für jede teilnehmerseitige MAC Adresse eine zusätzliche virtuelle MAC Adresse im Netz benötigt wird. Auch dieses Verfahren löst nicht das Problem des simultanen Zugangs zu verschiedenen unabhängigen IP Netzen.
d) In einem weiteren Verfahren, das dem Stand der Technik entspricht, terminiert eine IP-Router Funktion im ZugangsKnoten die Schicht 2 und routet die IP Pakete der Schicht 3 anhand der IP Adressen (IP routing). Bei dieser Lösung ergeben sich folgende Nachteile:
   i. Der Zugangsnetzbetreiber muss selbst IP Netzbetreiber werden
   ii. Die IP Adressen können nicht von unabhängigen IP Netzbetreibern vergeben werden.
   iii. Die Zahl der IP-Router erhöht sich um ca. ein bis zwei Größenordnung im Vergleich zu heutigen IP-Netzen, wodurch der Aufwand zum Betreiben des IP Netzes erheblich ansteigt.
   iv. Der IP Router muss aufwendige Routingprotokolle beherrschen.
e) Eine weitere bekannte Lösung verwendet das PPPoE oder PPPoA Protokoll zwischen Kundennetz und IP Netzbetreiber. Hierbei werden PPP Tunnel zum jeweiligen IP Netz aufgebaut, in dem die IP Pakete transportiert werden. Nachteilig sind bei dieser Lösung die hohen Kosten zur Terminierung von PPPoE/PPPoA in einem Broadband Access Server (BAS) sowie Sicherheitsprobleme in Ethernet basierten Zugangsnetzen.

### Lösung der Zusatz-Aufgabenstellung gemäß der Erfindung

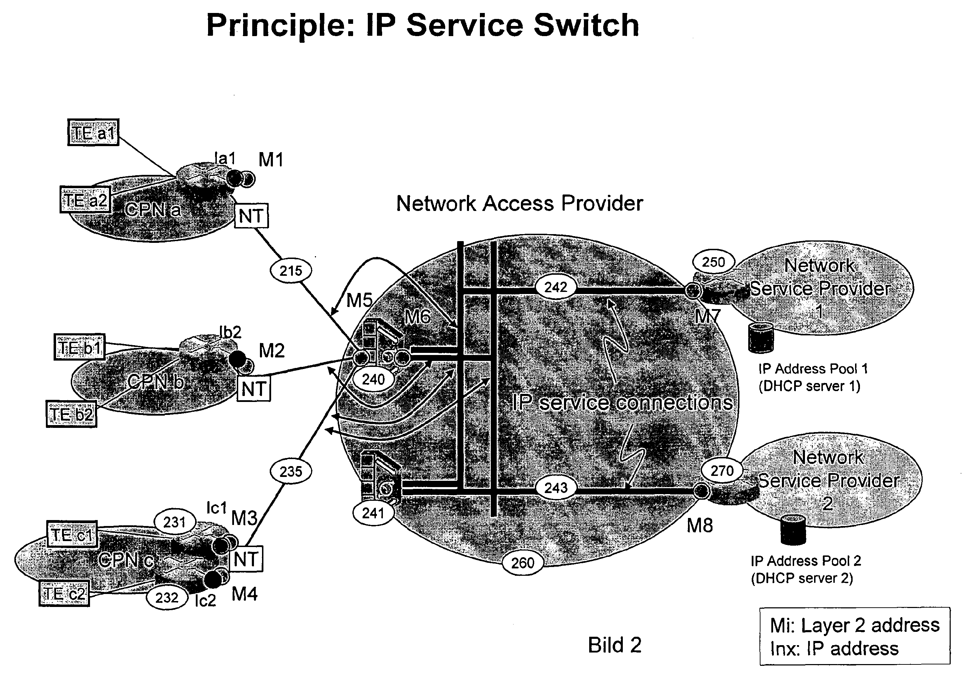

Bild 2 zeigt schematisch die Funktionsweise eines Zugangsknotens, der erfindungsgemäß als IP Service Switch arbeitet. Im Zugangsnetz 260 sind für jeden unterstützten IP-Netzbetreiber eine oder mehrere "IP-Dienst-Verbindungen" zwischen einen oder mehren Zugangsknoten und einem oder mehren IP Edge Routern der IP Netzbetreiber realisiert. Im Beispiel von Bild 2 ist eine IP-Dienst-Verbindung 242 zwischen den Zugangsknoten 240 und 241 und dem Edge Router 250 für Netzbetreiber 1 eingerichtet. Entsprechend ist eine weitere IP-Dienst-Verbindung 243 zwischen den gleichen Zugangsknoten 240 und 241 und dem IP Edge Node 270 eingerichtet.

IP-Dienst-Verbindungen sind im einfachsten Fall nur durch eine Schicht 2 Ziel-Adresse der Schnittstelle im Zugangsnetz zu einem IP Edge Router des jeweiligen IP Netzbetreibers gegeben. Dieses sind im Beispiel von Bild 2 die Schicht 2 Adressen M7 und M8. In Ethernet Netzen sind M7 und M8 die MAC Adressen der Ethernet Schnittstelle in den Edge Routern 250 und 251. Kennzeichnend für eine IP-Dienst-Verbindung im Sinne dieser Erfindung ist der Transport von IP Paketen zwischen einem oder mehreren IP Service Switchen einerseits und einem oder mehreren Edge Routern andererseits, die durch Schicht 2 Adressen vom erfindungsgemäßen Netzelement (IP Service Switch) erreicht werden können (der IP Service Switch selbst benötigt dafür keine eigene IP Addresse). Da die IP Dienstverbindungen somit auf Schicht 2 definiert sind, können die IP Adressen der transportierten IP Pakete zwischen verschiedenen IP Dienst-Verbindungen unabhängig voneinander gewählt werden.

Aus Sicherheitsgründen und um spezifische Dienstgüten im Zugangsnetz einfacher garantieren zu können, ist es oft vorteilhaft zusätzliche Schicht 2 Attribute einzusetzen, um IP Dienstverbindungen zu realisieren. In Ethernet Netzen kann hierzu zum Beispiel vorteilhaft die VLAN-Technik nach IEEE Standard 802.1q verwendet werden. Dazu setzt der IP Service Switch 240 im Beispiel der Bilder 2 , 3, 4 neben der Ziel MAC Adresse M7 bzw. M8 das VLAN tag 2011 bzw. 2022 der IP Dienstverbindung auf. Dies ist vorteilhaft da hiermit Ressourcen des Zugangsnetzes einer IP Dienstverbindung in den nachfolgenden L2 Switchen des Zugangsnetzbetreibers nur anhand des VLAN Tags zugewiesen werden können. Dies ist eine weit verbreitete Funktion in vielen Schicht 2 Switchen. Auch sind Realisierungen von IP Dienstverbindungen durch MPLS (Label Switched Path) oder IP Technik (zum Beispiel L2TP, RFC 2661) denkbar.

Zusätzlich ist in Bild 2 gezeigt, wie der Zugangsknoten IP Pakete zwischen IP Sessions der kundenseitigen Ports einerseits und den IP-Dienst-Verbindungen andererseits vermittelt. Beispielsweise werden ankommende IP-Pakete von der IP Session auf Zugangsleitung 215 (entsprechend Port a in Bild 1) auf die IP-Dienst-Verbindung 242 vermittelt und umgekehrt ankommende IP Pakete auf der IP-Dienst-Verbindung 242 mit IP Adresse Ia1 auf die IP Session der Zugangsleitung 215 vermittelt.
Im Beispiel der Zugangsleitung 235 ist angenommen, dass IP Pakete der beiden verschiedenen IP Session zwischen den Kundenroutern 231 und 232 einerseits und dem Zugangsknoten 240 andererseits z.B. über ein jeweils unterschiedliches Ethernet VLAN (beispielsweise "1001" und "1002") nach IEEE Standard 802.1q oder z.B. über unterschiedliche ATM PVC transportiert werden. Ankommende IP Pakete in Schicht 2 Frames von Zugangsleitung 235 mit Ursprungs-Schicht 2 Adresse M3 und aus VLAN "1001" gehören zu einer IP Session und werden auf IP-Dienst-Verbindung 242 und ankommende IP Pakete von Zugangsleitung 235 mit Ursprungs-Schicht 2 Adresse M4 und aus VLAN "1002" werden auf IP-Dienst-Verbindung 243 vermittelt. Umgekehrt werden vom Zugangsknoten ankommende IP Pakete auf IP-Dienst-Verbindung 242 mit IP Adresse Ic1 in Schicht 2 Frames mit VLAN "1001" und Ziel Schicht 2 Adresse M3 verpackt und auf die Zugangsleitung 235 vermittelt. Ankommende IP Pakete auf IP Dienstverbindung 243 mit IP Adresse Ic2 werden in Schicht 2 Frames mit VLAN "1002" und Ziel Schicht 2 Adresse M4 der Zugangsleitung 235 vermittelt.
Kennzeichnend für eine IP Session im Sinne dieser Erfindung sind
a) mindestens eine Schicht 2 Adresse, mit der ein Gerät in einem Kundennetz erreicht werden kann, und
b) mindestens eine dieser genannten Schicht 2 Adresse zugeordnete IP Adresse.

In den meisten Fällen ist es vorteilhaft, zur Kennzeichnung einer IP Session zusätzlich ein oder mehrere physikalische Ports des erfindungsgemäßen Netzelementes über die das genannte Gerät im genannten Kundennetz erreicht werden kann, hinzuzunehmen. Beispielsweise können somit verschiedene Geräten dieselbe Schicht 2 Adressen verwenden, wenn diese über verschiedene physikalische Ports erreichbar sind.

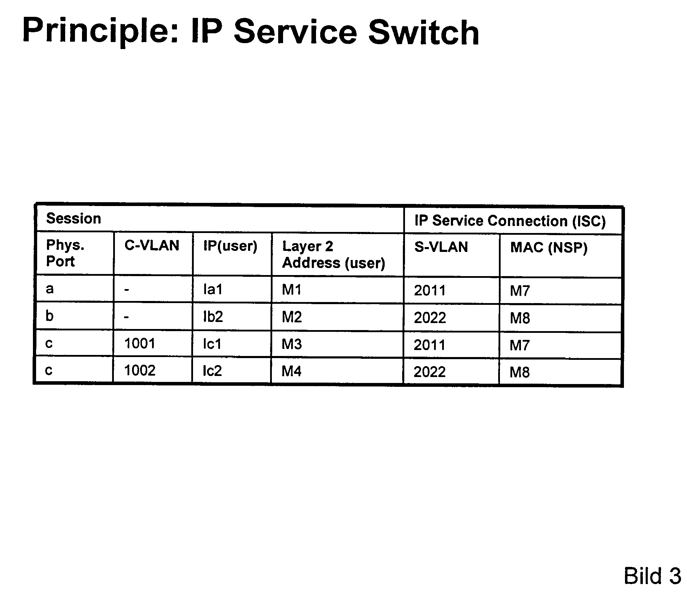

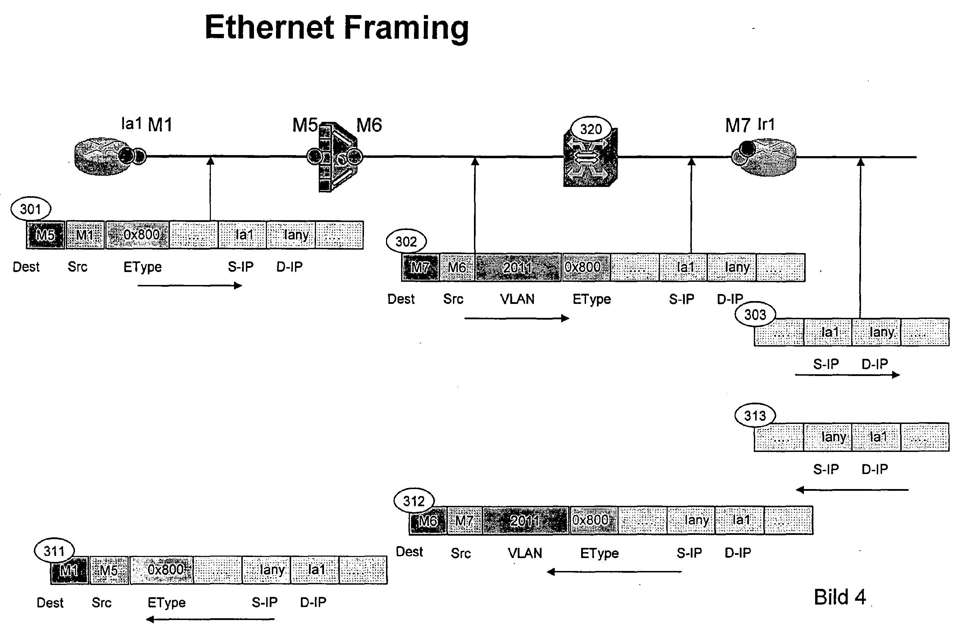

Die Vorschriften zur Session-basierten IP Vermittlung können vom Zugangsknoten in Tabellenform gehalten werden. Ein Beispiel ist in Bild 3 gezeigt. In dieser Tabelle werden endkundenseitige IP Sessions netzseitigen IP-Dienstverbindungen zugeordnet.
IP Sessions sind im Beispiel durch einen kundenseitigen physikalischen Port am IP Service Switch (im Beispiel a,b, oder c) und durch eine kundenseitige Schicht 2 Adresse und die zugeordnete IP Adresse definiert. Zusätzlich können weiter Attribute eine IP Session definieren. Dazu gehören zum Beispiel , ein kundenseitiges VLAN tag (in Bild 4 unter der Tabellenspalte "C-VLAN").

IP-Dienstverbindungen sind im Beispiel durch eine netzseitige Schicht 2 Adresse eines Endpunktes der IP Dienstverbindung definiert. Im Beispiel von Bild 3 sind es die Adressen M7 und M8 der Endpunkte auf den IP Edge Routern 151 und 171 der beiden IP Netzbetreiber 150 und 170. Optional können weitere Attribute eine Dienstverbindung charakterisieren. Im Beispiel der Vermittlungsvorschrift von Bild 3 sind jeweils ein VLAN tag (in Bild 4 unter der Tabellenspalte "S-VLAN") nach IEEE 802.1q einer Dienstverbindung zugeordnet.

Mit Hilfe der durch die Tabelle in Bild 3 vorgegebenen Vermittlungsvorschriften können die notwendigen Adress- und Attributumsetzungen durch den IP Service Switch erfolgen. Neben dieser Umsetzungen können zusätzliche Überprüfungen des Verkehrs stattfinden, um zum Beispiel die Netzsicherheit und - integrität zu gewährleisten. Beispielsweise können IP-Pakete eines Endkunden verworfen werden, wenn diese nicht die in einer Vermittlungsvorschrift vorgegebene Quell-IP Adresse tragen. Die Vermittlungsvorschriften können entweder ganz oder teilweise administrativ vorgegeben werden oder sie werden beim Aufbau einer IP-Session durch Bearbeitung von Protokollen zur Authentisierung, Autorisierung und IP-Adressvergabe wie 802.1x, DHCP, RADIUS im Zugangsknoten automatisch erlernt.

Bild 4 zeigt für den Fall von Ethernet als Schicht 2 Protokoll, in einer vorteilhafte Ausprägung der Erfindung wie die Vermittlungsvorschriften aus Bild 3 von einem Netzelement genutzt werden, um die Schicht 2 Adressen und Attribute der Ethernet Frames bei der Vermittlung der Pakete zwischen IP Session und IP Dienstverbindung umzusetzen.

Im Gegensatz zum bekannten Lösungsansatz 1d) können in dieser vorteilhaften Ausprägung des erfindungsgemäßen Verfahrens verschiedene teilnehmerseitige MAC Adressen M1 bis M4 auf die gleiche Netzadresse M6 abgebildet werden. Im Beispiel von Bild 4 wird die Quell-Adresse M1 im Frame 301 im IP Service Switch durch die MAC Adresse M6 im Frame 302 ersetzt. Gleichzeitig wird die Zieladresse M5 im IP-Service Switch durch die Zieladresse M7 des Edge Routers 250 ersetzt. Umgekehrt wird im Beispiel von Bild 3 in Rückwärtsrichtung (Frames 311,312,313) die Quelladresse M7 im Frame 312 durch die Quelladresse M5 des IP-Service Switch ersetzt, bevor das Frame zum Kundenrouter 111 gesendet wird. Entsprechend wird die Zieladresse M6 in Frame 312 durch die Adresse M1 des Kundenrouters 111 ersetzt.

Hierdurch erhöht sich die Skalierbarkeit, da das Zugangsnetz nicht die teilnehmerseitigen MAC Adressen M1 bis M4 erlernen muss. Zugleich werden Angriffe wie "MAC Address Flooding" auf das Zugangsnetz abgewehrt. In umgekehrter Richtung werden die netzseitigen MAC Adressen M7 und M8 der Edge Router 250 und 270 nicht zu den Teilnehmern weitergeleitet sondern durch eine MAC Adresse M5 des IP Service Switches ersetzt. Auch hierdurch erhöht sich die Netzsicherheit, da hiermit die Adressen der Edge Router den Teilnehmern verborgen bleiben.

Vorteilhaft ist es auch, wenn im IP Service Switch 240 in Richtung Netz als zusätzliches Attribut der IP Dienstverbindung ein VLAN Tag (im Beispiel von Bild 4 das VLAN tag "2011") aufgesetzt wird. Anhand dieses VLAN tags können in einem nachfolgendem Schicht 2 Switch Ressourcen wie z.B. Bandbreite auf einer Verbindungsleitung reserviert werden. In Richtung zum Endkunden wird das VLAN Tag "2011" vom IP Service Switch entfernt. Andere Realisierungen von IP-Dienstverbindungen z.B. anhand von MPLS Pfaden (LSP, Labeled Switched Path) sind möglich und sind nur Abwandlungen dieser Erfindung.

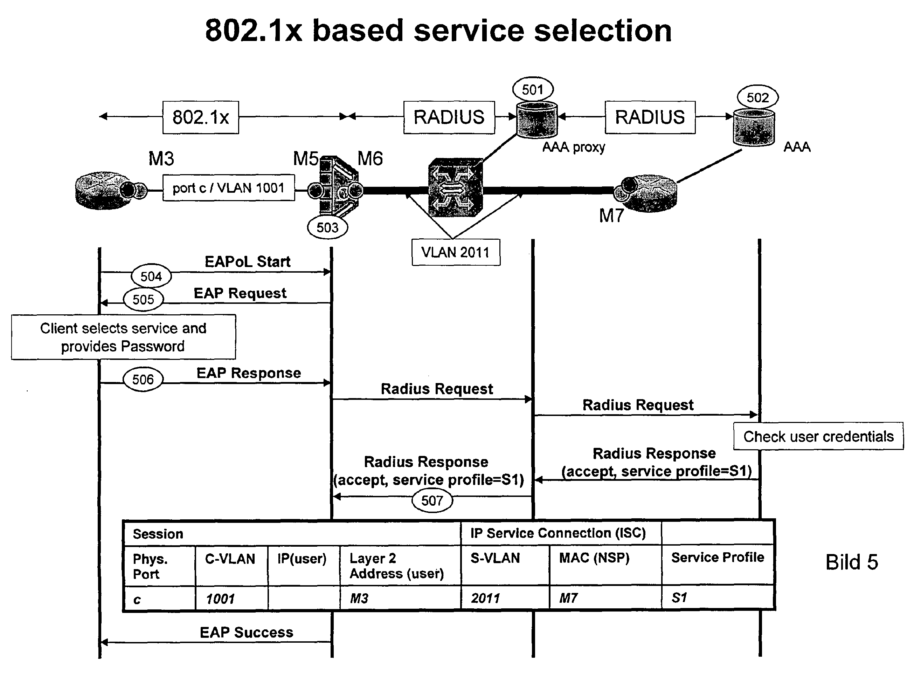

Bild 5 zeigt in einer weiteren vorteilhaften Ausprägung wie IEEE Standard 802.1x genutzt werden kann, um einen ersten Teil der Vermittlungsvorschrift zu bestimmen. Der Nutzer wird zunächst entsprechend dem Stand der Technik mit Hilfe der Protokolle 802.1x und RADIUS, sowie einer AAA (Authentication, Authorization, Accounting) Datenbank authentifiziert und authorisiert. Dabei kann der Nutzer beispielsweise durch Angabe eines Fully Qualified Domain Names (FQDN) den gewünschten Dienst und IP-Netzbetreiber angeben. Anhand des FQDN wird der RADIUS Request durch den Proxy 501 zum AAA-Server 502 des IP-Netzbetreibers weitergegeben. Dieser überprüft die Credentials (z.B. Passwort) und gibt im Erfolgsfall eine RADIUS Nachricht zurück, die Informationen über den angeforderten Dienst enthält (Service Profile). Anhand dieser Informationen kann der IP Service Switch 503 die zugehörige IP Dienstverbindung bestimmen, die im Beispiel durch die Schicht 2 Adresse M7 und das S-VLAN "2011" gegeben ist. Physikalischer Port (c), C-VLAN (1001) und Layer 2 Adresse des Endkundengerätes werden vom IP Service Switch aus den 802.1x Frames 504, 505 und 506 abgeleitet.

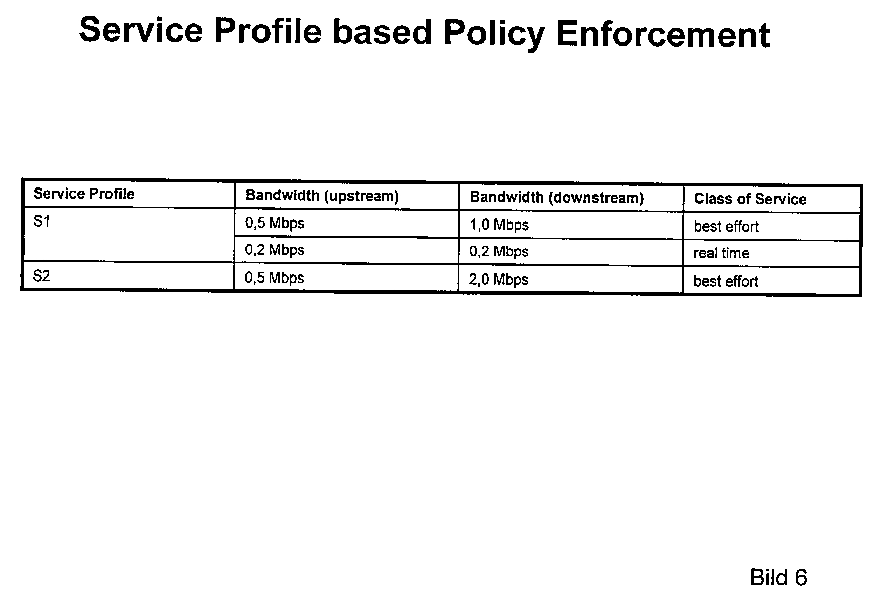

Bild 6 zeigt, wie im IP Service Switch ein Service Profil (im Beispiel von Bild 5 das Service Profil S1 aus der Nachricht 507) verwendet werden kann, um gezielt für die jeweilige IP Session ein Policing des Verkehrs durchzuführen. Dazu hält der IP Service Switch zum Beispiel eine Tabelle wie in Bild 6, in dem verschiedene Service Profile definiert sind. So definiert Profil S1 einen IP Service mit einer "best effort" und einer "real time" Verkehrsklasse, wobei jeweils die angegeben maximalen Bandbreiten vom IP Service Switch für eine IP Session mit Profil S1 freigegeben werden. Entsprechend definiert S2 ein Profil mit nur einer "best effort" Verkehrsklasse mit den angegeben maximalen Bandbreiten.

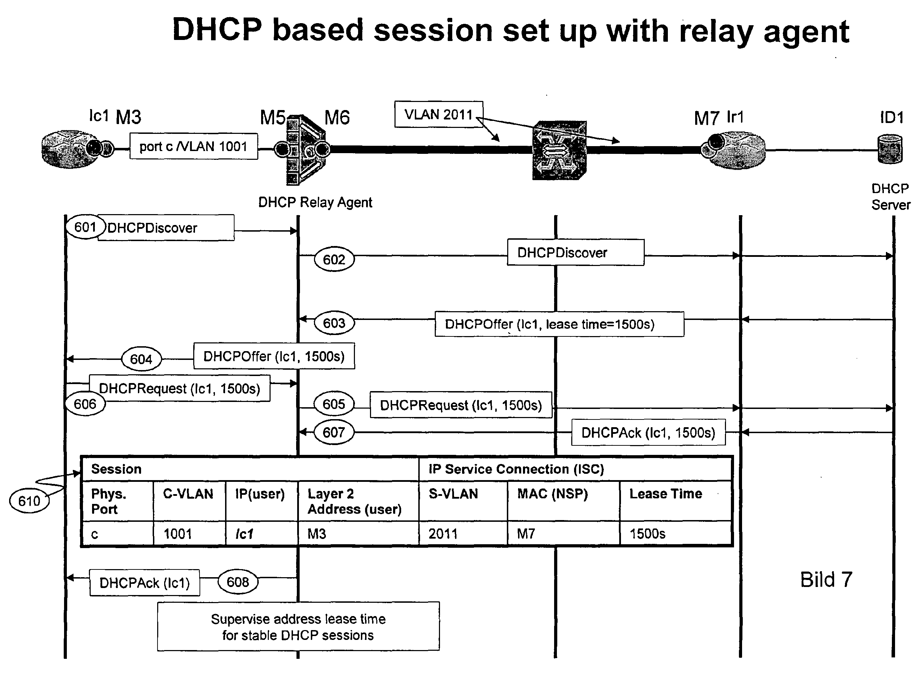

Bild 7 zeigt für den Fall von IPv4 wie DHCP Nachrichten verwendet werden, um eine IP Session aufzubauen. Hierbei wird im IP Service Switch ein DHCP Relay Agent eingesetzt, über den sämtliche DHCP Nachrichten zwischen Dienstnutzern und Netz geführt werden. Aus dem Nachrichtenaustausch 601 bis 608 kann der Relay Agent die notwendige Vermittlungsvorschrift entnehmen und damit die Tabelle 610 füllen. Optional kann in die Vermittlungsvorschrift die DHCP Lease Time aufgenommen und vom IP Service Switch überwacht werden. Im Beispiel ist die Lease Time 1500s lang.

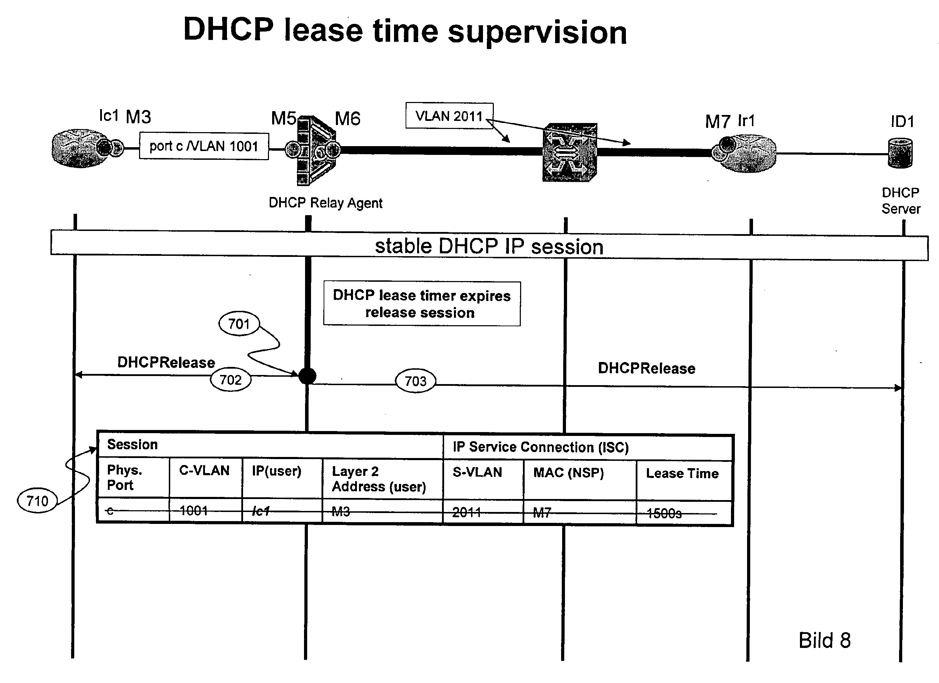

Bild 8 zeigt wie nach Ablauf der Lease Time der IP Service Switch die IP Session auslöst. Hierzu sendet der Relay Agent DHCP Release Nachrichten zum Endgerät und zum netzseitigen DHCP Server. Zusätzlich werden in der Tabelle der Vermittlungsvorschriften (710) die Daten der IP Session gelöscht. Danach werden keine IP Pakete mit der Ursprungsadresse Ic1 von diesem Session Port in das Netz weitergeleitet.

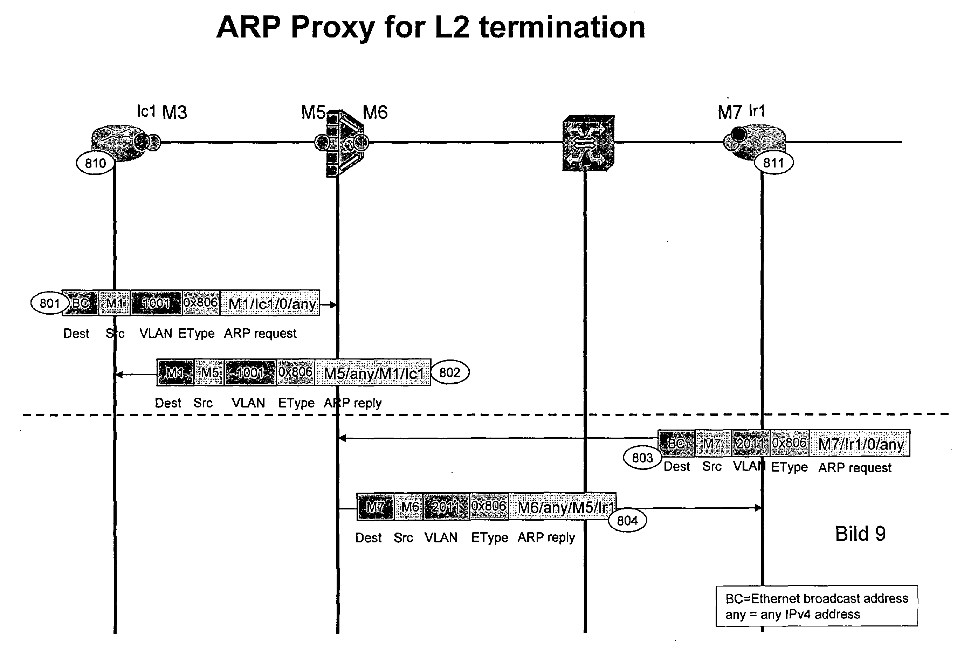

Bild 9 zeigt wie im Falle von IPv4 ARP Requests des Nutzers 801 bzw. ARP requests des IP Edge Routers 803 vom IP Service Switch beantwortet werden. In jedem der beiden Fälle und für jede der IP Adressen "any" beantwortet der IP Service Switch ARP Requests mit seiner jeweiligen MAC Adresse. Dies ist M5 im Falle des ARP Reply 802 und M6 im Falle des ARP Reply 804. Diese Antworten stellen sicher, dass sowohl das nutzerseitige Geräte 810 als auch der netzseitige IP Router 811 die MAC Adressen des IP Service Switchs verwenden um die IP Pakete zu übermitteln.

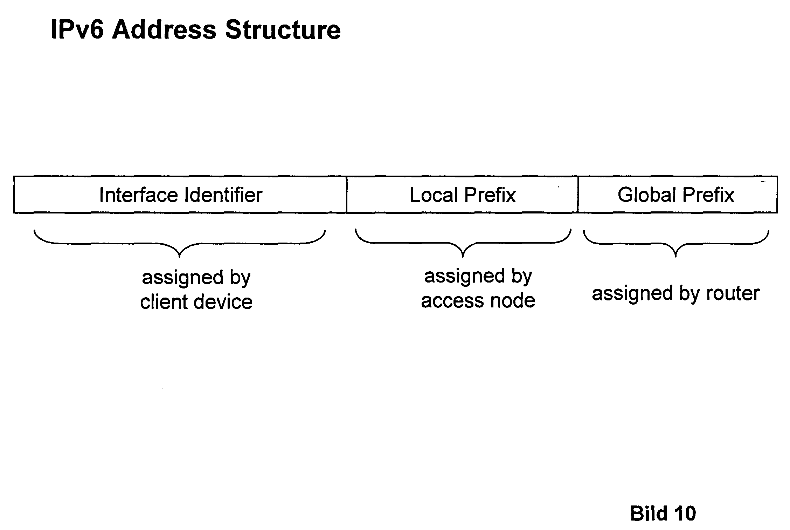

Bild 10 zeigt die Struktur der IP Adresse für den Sonderfall IPv6. Hier entsteht das Problem, dass die IP Adresse einen Interface Identifier enthält, der vom Client selbst vergeben wird. Der Interface Identifier kann der Schicht 2 Adresse des Clients entsprechen, er kann aber auch zufällig gewählt werden. Somit entsteht das Problem, das auch bei identischen Interface Ids mehrerer Clients eine eindeutige IP Adresse generiert werden muss. Erfindungsgemäß wird dieses Problem so gelöst, dass der IP Service Switch selbst einen lokalen IP Prefix vergeben kann, der im Einzelfall so gewählt ist, dass eine eindeutige IP Adresse entsteht. Jedem IP Service Switch in einem Subnetz müssen also mehrere lokale Prefixe zugewiesen werden, so dass die Kombination von lokalem und globalem Prefix immer eine eindeutige IP Adresse ergibt, unabhängig vom jeweiligen Interface Identifier. Der Client erhält diese Zuordnung entweder über DHCP oder mittels stateless address autoconfiguration (router discovery).

### Vorteile, die sich aus der Lösung der Aufgabenstellung der Erfindung ergeben

a) Sessionbasiertes IP Vermittlung statt IP-Routing im IP Service Switch. Damit muss der Zugangsnetzbetreiber nicht gleichzeitig IP Netzbetreiber sein, d.h. er benötigt keine eigenen IP Adressen für die Teilnehmer. Gleichzeitig können mehrere IP-Netzbetreiber im gleichen Zugangsnetz unterstützt werden. Ein Teilnehmer kann auch simultan mehrere IP Session zu verschiedenen IP Netzbetreibern halten.
   Außerdem wird verhindert, dass die Zahl der IP-Knoten um ein bis zwei Größenordnungen im Vergleich zu heute üblichen IP-Netzen anwächst.
b) Die Erfindung ermöglicht eine Netzarchitektur für IP/Ethernet-basierte Zugangsnetze, welche die Funktion des BAS in das Zugangsnetz verlagert und so modifiziert, dass die Zugangskontrolle mit IP/Ethernet-basierten Methoden erfolgen kann. Einerseits entfällt dadurch die Notwendigkeit für einen separaten BAS, was zu signifikanten Kosteneinsparungen führt. Zum anderen verschiebt sich die Zugangskontrolle näher zum Teilnehmer, wodurch sich eine hohe Netzsicherheit ergibt und eine bessere QoS Unterstützung ermöglicht wird.

### Vorteil, der sich aus der Lösung der Zusatz-Aufgabenstellung der Erfindung ergibt

Terminierung von Schicht 2. Insbesondere bei Einsatz von Ethernet als Schicht 2 sind eine Vielzahl möglicher Angriffe auf Netzfunktion und -integrität bekannt. Durch Terminierung von Schicht 2 im IP Service Switch werden diese Angriffe für die hinter den IP Service Switch liegende Netzknoten weitgehend entschärft.

## Patentansprüche

**1.** Verfahren zur Vermittlung von IP-Paketen zwischen Kundennetzen und IP-Provider-Netzen über ein Zugangsnetz, demgemäß in einem Netzelement des Zugangsnetzes
a) eine IP Session zwischen einem Kundennetz und einem IP-Provider-Netz anhand einer dem Kundennetz zugeordneten Schicht 2 Adresse und einer dieser Schicht 2 Adresse zugeordneten IP-Adresse registriert wird,
b) eine IP-Dienstverbindung zwischen dem Netzelement und einem IP-Provider-Netz anhand einer dem IP-Provider-Netz zugeordneten Schicht 2 Adresse festgelegt wird,
c) eine aktive IP-Session mindestens einer IP-Dienstverbindung zugeordnet wird und/oder mehrere aktive IP Session derselben IP Dienstverbindung zugeordnet werden.
d) das Vermitteln der IP-Pakete von aktiven IP Sessions zu Dienstverbindungen und umgekehrt anhand der genannten Zuordnungen durchgeführt wird.

**2.** Verfahren nach Anspruch 1,
**dadurch gekennzeichnet,**
**dass** aufgrund der genannten Zuordnung
a) Schicht 2 Adresse(n) und/oder Attribute aus Frames, in denen IP Pakete einer IP Session zu dem genannten Netzelement übermittelt werden, bei der genannten Vermittlung ganz oder teilweise durch die der jeweiligen Dienstverbindung zugeordneten Schicht 2 Adresse(n) und/oder Attribute ersetzt werden und/oder
b) Schicht 2 Adresse(n) und/oder Attribute aus Frames, in denen IP Pakete von IP Dienstverbindungen zu dem Netzelement übermittelt werden, bei der genannten Vermittlung ganz oder teilweise durch die der jeweiligen IP Session zugeordneten Schicht 2 Adresse(n) und/oder Attribute ersetzt werden.

**3.** Verfahren nach Anspruch 1,
**dadurch gekennzeichnet,**
**dass** die Zuordnung einer IP Session zu einer IP Dienstverbindung während des IP-Session-Aufbaus durch das Netzelement mit Hilfe von Session-Aufbaunachrichten erlernt wird.

**4.** Verfahren nach Anspruch 1,
**dadurch gekennzeichnet,**
**dass** die Zuordnung einer IP Session zu einer IP-Dienstverbindung nach dem Sessionaufbau durch Session-Modifikationsnachrichten geändert wird.

**5.** Verfahren nach Anspruch 1,
**dadurch gekennzeichnet,**
**dass** ein IP-Paket durch ein IPv4 Paket oder ein IPv6 Paket gegeben ist.

**6.** Verfahren nach Anspruch 1,
**dadurch gekennzeichnet,**
**dass** eine IP Session zusätzlich mithilfe eines oder mehreren physikalischen Ports des genannten Netzelementes registriert wird.

**7.** Verfahren nach Anspruch 1,
**dadurch gekennzeichnet,**
**dass** unabhängig von der Ziel-IP Adresse in ankommenden IP Paketen einer IP Session, alle IP Pakete einer IP Session auf dieselbe IP-Dienstverbindung oder dieselben IP-Dienstverbindungen vermittelt werden.

**8.** Verfahren nach Anspruch 1,
**dadurch gekennzeichnet,**
**dass** eine Schicht 2 Adresse durch eine Ethernet MAC Adresse festgelegt wird.

**9.** Verfahren nach Anspruch 1,
**dadurch gekennzeichnet,**
**dass** eine Schicht 2 Adresse durch ein VPI/VCI Paar einer ATM Strecke festgelegt wird.

**10.** Verfahren nach Anspruch 1,
**dadurch gekennzeichnet,**
**dass** eine Schicht 2 Adresse durch ein oder mehrere MPLS Label einer MPLS Strecke festgelegt wird.

**11.** Verfahren nach Anspruch 1,
**dadurch gekennzeichnet,**
**dass** eine Schicht 2 Adresse durch einen DLCI einer Frame Relay Strecke festgelegt wird.

**12.** Verfahren nach Anspruch 1,
**dadurch gekennzeichnet,**
**dass** eine IP Session zusätzlich durch weitere IP Adressen (z.B. ein IP Subnetz) und/oder eines oder mehrere der folgende Attribute gekennzeichnet wird
a) ein Ethernet VLAN tag
b) ein Ethernet .1p code point
c) ein DSCP code point des zu vermittelnden IP Paketes
d) eine Schicht 2 Adresse des genannten Netzelementes

**13.** Verfahren nach Anspruch 1,
**dadurch gekennzeichnet,**
**dass** eine IP Dienstverbindung zusätzlich durch eines oder mehrere der folgende Attribute festgelegt wird
a) ein Ethernet VLAN tag
b) einen Ethernet .1p code point
c) ein DSCP code point .
d) eine Schicht 2 Adresse des genannten Netzelementes.

**14.** Verfahren nach Anspruch 1,
**dadurch gekennzeichnet,**
**dass** IP Sessions durch IPv6 Router Discovery / Stateless Address Autoconfiguration Nachrichten aufgebaut werden.

**15.** Verfahren nach Anspruch 1,
**dadurch gekennzeichnet,**
**dass** IP Sessions durch DHCP Nachrichten aufgebaut werden.

**16.** Verfahren nach Anspruch 1 und 3,
**dadurch gekennzeichnet,**
**dass** Session-Modifikationsnachrichten durch DHCP_Request-Nachrichten gegeben sind.

**17.** Verfahren nach Anspruch 1,
**dadurch gekennzeichnet,**
**dass** beim IP Session-Aufbau zusätzlich 802.1x Nachrichten verwendet werden.

**18.** Verfahren nach einem der Ansprüche 1 bis 17,
**dadurch gekennzeichnet,**
**dass** das Netzelement für eine IP Session basierend auf Informationen der Session-Aufbau- oder der Session-Modifikationsnachrichten ein "Policy Enforcement" durchführt.

**18.** Verfahren nach Anspruch 1,
**dadurch gekennzeichnet,**
**dass** die DHCP lease time durch das Netzelement für die IP Sessions überwacht wird und nach Ablauf der Lease Time die IP Session abgebaut wird.

**20.** Verfahren nach einem der Ansprüche 1 bis 19,
**dadurch gekennzeichnet,**
**dass** ein IPv6 Neighbor Discovery Proxy im Netzelement realisiert wird, durch den kunden- und netzseitige Neighbor Discovery Requests mit einer Schicht 2 Adresse des Netzelementes beantwortet werden.

**21.** Verfahren nach einem der Ansprüche 1 bis 19,
**dadurch gekennzeichnet,**
**dass** ein ARP-Proxy im Netzelement realisiert wird, durch den kunden- und netzseitige ARP-Requests mit einer Schicht 2 Adresse des Netzelementes beantwortet werden.

**22.** Verfahren nach Anspruch 1,
**dadurch gekennzeichnet,**
**dass** einer IP Session außer dem globalen auch ein lokaler IP Address Prefix zugeordnet wird.

**23.** Netzelement eines Zugangsnetzes, das
a) eine IP Session zwischen einem Kundennetz und einem IP-Provider-Netz anhand einer dem Kundennetz zugeordneten Schicht 2 Adresse und einer dieser Schicht 2 Adresse zugeordneten IP-Adresse registriert,
b) eine IP-Dienstverbindung zwischen dem Netzelement und einem IP-Provider-Netz anhand einer dem IP-Provider-Netz zugeordneten Schicht 2 Adresse festlegt,
c) eine aktive IP-Session mindestens einer IP-Dienstverbindung zuordnet wird und/oder mehrere aktive IP Session derselben IP Dienstverbindung zuordnet,
d) das Vermitteln der IP-Pakete von aktiven IP-Sessions zu Dienstverbindungen und umgekehrt anhand der genannten Zuordnungen durchführt.

**24.** Netzelement nach Anspruch 23,
**dadurch gekennzeichnet,**
**dass** das Netzelement aufgrund der genannten Zuordnung
a) Schicht 2 Adresse(n) aus Frames, in denen IP-Pakete einer IP-Session zu dem Netzelement übermittelt werden, bei der genannten Vermittlung ganz oder teilweise durch die der jeweiligen Dienstverbindung zugeordneten Schicht 2 Adresse(n) ersetzt und/oder
b) Schicht 2 Adresse(n) aus Frames, in denen IP Pakete von IP Dienstverbindungen zu dem Netzelement übermittelt werden, bei der genannten Vermittlung ganz oder teilweise durch die der jeweiligen IP Session zugeordneten Schicht 2 Adresse(n) ersetzt.

**25.** Netzelement nach Anspruch 24,
**dadurch gekennzeichnet,**
**dass** das Netzelement aufgrund der genannten Zuordnung
a) Attribute aus Frames, in denen IP-Pakete einer IP-Session zu dem Netzelement übermittelt werden, bei der genannten Vermittlung ganz oder teilweise durch die der jeweiligen IP-Dienstverbindung zugeordneten Attribute ersetzt und/oder
b) Attribute aus Frames, in denen IP-Pakete von IP-Dienstverbindungen zu dem Netzelement übermittelt werden, bei der genannten Vermittlung ganz oder teilweise durch die der jeweiligen IP Session zugeordneten Attribute ersetzt.

**26.** Netzelement nach Anspruch 23,
**dadurch gekennzeichnet,**
**dass** es die Zuordnung einer IP Session zu einer IP Dienstverbindung während des IP-Session-Aufbaus mit Hilfe von Session-Aufbaunachrichten erlernt.

**27.** Netzelement nach Anspruch 23,
**dadurch gekennzeichnet,**
**dass** es die Zuordnung einer IP Session zu einer IP-Dienstverbindung nach dem Sessionaufbau durch Session-Modifikationsnachrichten ändert.

**28.** Netzelement nach Anspruch 23,
**dadurch gekennzeichnet,**
**dass** es eine IP Session zusätzlich mithilfe eines oder mehreren physikalischen Ports registriert.

**29.** Verfahren zur Vermittlung von IP-Paketen zwischen Kundennetzen und IP-Provider-Netzen über ein Zugangsnetz, demgemäß in einem Netzelement des Zugangsnetzes
a) eine IP Session zwischen einem Kundennetz und einem IP-Provider-Netz anhand einer kundennetzseitigen Schicht 2 Adresse und einer dieser Schicht 2 Adresse zugeordneten IP-Adresse registriert wird,
b) eine IP-Dienstverbindung zwischen dem Netzelement und einem IP-Provider-Netz anhand einer providernetzseitigen Schicht 2 Adresse festgelegt wird,
c) von einem Kundennetz für ein empfangenes IP-Paket anhand der kundennetzseitigen Schicht 2 Kunden-Adresse und der dieser Schicht 2 Adresse zugeordneten IP-Adresse die Zugehörigkeit zu einer IP-Session bestimmt wird und das genannte IP-Pakete sodann über mindestens eine dieser IP-Session zugeordnete Dienstverbindung an das IP-Provider-Netz weitergeleitet wird,
d) Von einem IP-Provider-Netz für ein empfangenes IP-Paket anhand der providernetzseitigen Schicht 2 Adresse und der dieser Schicht 2 Adresse zugeordneten IP-Adresse die Zugehörigkeit zu einer IP-Dienstverbindung bestimmt wird und das genannte IP-Pakete sodann über mindestens eine dieser IP-Dienstverbindung zugeordnete IP-Session an das Kundennetz weitergeleitet wird.

**30.** Netzelement eines Zugangsnetzes, das
a) eine IP Session zwischen einem Kundennetz und einem IP-Provider-Netz anhand einer kundennetzseitigen Schicht 2 Adresse und einer dieser Schicht 2 Adresse zugeordneten IP-Adresse registriert,
b) eine IP-Dienstverbindung zwischen dem Netzelement und einem IP-Provider-Netz anhand einer providernetzseitigen Schicht 2 Adresse festlegt,
c) für ein von einem Kundennetz empfangenes IP-Paket anhand der kundennetzseitigen Schicht 2 Kunden-Adresse und der dieser Schicht 2 Adresse zugeordneten IP-Adresse die Zugehörigkeit zu einer IP-Session bestimmt und das genannte IP-Pakete sodann über mindestens eine dieser IP-Session zugeordnete Dienstverbindung an das IP-Provider-Netz weiterleitet,
d) für ein von einem IP-Provider-Netz empfangenes IP-Paket anhand der providernetzseitigen Schicht 2 Adresse und der dieser Schicht 2 Adresse zugeordneten IP-Adresse die Zugehörikeit zu einer IP-Dienstverbindung bestimmt wird, und das genannte IP-Pakete sodann über mindestens eine dieser IP-Dienstverbindung zugeordnete IP-Session an das Kundennetz weitergeleitet wird.
